(19) Europäisches Patentamt
European Patent Office
Office européen des brevets

(11) **EP 2 930 814 B1**

(12) **EUROPEAN PATENT SPECIFICATION**

(45) Date of publication and mention of the grant of the patent:
**11.10.2017 Bulletin 2017/41**

(21) Application number: **14853185.8**

(22) Date of filing: **22.04.2014**

(51) Int Cl.:
*H02J 3/38* (2006.01)    *H02J 3/00* (2006.01)

(86) International application number:
**PCT/CN2014/075940**

(87) International publication number:
**WO 2015/106502 (23.07.2015 Gazette 2015/29)**

(54) **METHOD AND SYSTEM FOR OBTAINING FLICKER TRANSFER COEFFICIENT IN GRID CONNECTION OF PHOTOVOLTAIC POWER STATION**

VERFAHREN UND SYSTEM ZUM ERMITTELN EINES FLICKERÜBERTRAGUNGSKOEFFIZIENTEN IN EINER NETZRVERBINDUNG EINES PHOTOVOLTAIK-KRAFTWERKS

PROCÉDÉ ET SYSTÈME POUR OBTENIR UN COEFFICIENT DE TRANSFERT DES OSCILLATIONS DANS LE RACCORDEMENT D'UNE CENTRALE PHOTOVOLTAÏQUE AU RÉSEAU DE DISTRIBUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2014 CN 201410017981**

(43) Date of publication of application:
**14.10.2015 Bulletin 2015/42**

(73) Proprietors:
- **State Grid Corporation of China (SGCC)**
  **Beijing 100031 (CN)**
- **State Grid Zhejiang Hangzhou Yuhang Power Supply**
  **Company**
  **LinPing, YuHang**
  **Hangzhou, Zhejiang 311100 (CN)**
- **Hangzhou Power Supply Company of**
  **State Grid Zhejiang Electric Power Company**
  **Hangzhou, Zhejiang 310000 (CN)**
- **State Grid Zhejiang Electric Power Company**
  **Zhejiang 310007 (CN)**

(72) Inventors:
- **XU, Guojun**
  **Hangzhou, Zhejiang 311100 (CN)**
- **Han, Yongqiang**
  **Hangzhou, Zhejiang 311100 (CN)**
- **XU, Huiping**
  **Hangzhou, Zhejiang 311100 (CN)**
- **LI, Tiyin**
  **Hangzhou, Zhejiang 311100 (CN)**
- **YAO, Haiyan**
  **Hangzhou, Zhejiang 311100 (CN)**
- **BAO, Zhengmin**
  **Hangzhou, Zhejiang 311100 (CN)**
- **QIAN, Hao**
  **Hangzhou, Zhejiang 311100 (CN)**

(74) Representative: **Detken, Andreas**
  **Isler & Pedrazzini AG**
  **Giesshübelstrasse 45**
  **Postfach 1772**
  **8027 Zürich (CH)**

(56) References cited:
**EP-A1- 2 481 923**    **EP-A1- 2 863 509**
**CN-A- 101 667 730**    **CN-A- 102 981 082**
**CN-A- 103 701 152**    **CN-Y- 201 270 525**
**US-A1- 2013 024 168**

**Description**

**TECHNICAL FIELD**

The present disclosure relates to the field of a flicker transmission coefficient of a power grid, in particular to a method and system for obtaining a flicker transmission coefficient of grid connection of photovoltaic power stations.

**BACKGROUND**

As environmental pollution and energy crisis being aggravated, the photovoltaic power station as new energy resource is applied and promoted, and a number of photovoltaic power stations are accessed into the power grid gradually. However, voltage fluctuation for a point of common coupling (PCC), namely flicker, may be generated by variation of the output power of the photovoltaic power station with the fluctuation of light intensity and the switching of power electronic devices such as a photovoltaic converter. The flicker is attenuated by vary degree after passing a power system. The degree of attenuation may be characterized by a flicker transmission coefficient. The calculation of flicker transmission coefficient is crucial for the evaluation of flicker pollution and the design of measures for limiting and restraining flicker in power network planning. Therefore, the flicker transmission coefficient is required generally after grid connection of photovoltaic power stations.

The method for obtaining a flicker transmission coefficient in the conventional technology mainly includes: actual measured evaluation and time-domain analysis. In the case that the flicker generated by the photovoltaic power station is transmitted from a certain point to another point in the power grid, the actual measured evaluation includes: determining a flicker transmission coefficient based on a short-time flicker value measured at two points at the same time. The short-time flicker value of a point is determined by the ratio of the voltage fluctuation to the steady-state voltage value of the point. The actual measured evaluation is mainly used for a radiant network, but the flicker transmission coefficient can not be obtained by means of the actual measurement method for an interconnected power grid or a power grid with one or more buses not being established. In this case, the flicker transmission coefficient is calculated by considering interaction among different buses using a time-domain analysis method.

However, in time-domain analysis, the photovoltaic power supply is simplified typically into a power supply with power fluctuation or a load with negative power, and it is difficult to consider the frequency characteristic of the impedance of the photovoltaic converter. The frequency characteristic of the impedance of the photovoltaic converter has an effect on the flicker transmission coefficient, and thus there may be a great error for the flicker transmission coefficient obtained without considering the frequency characteristic of the impedance of the photovoltaic converter. Therefore, how to obtain accurately the flicker transmission coefficient of grid connection of photovoltaic power stations is a challenge for those skilled in the art.

US 2013/024168A1 discloses distributed line flow processing for a network having nodes with branches coupling adjacent ones of the nodes and components coupled to the nodes.

**SUMMARY**

In view of the above, a method and system for obtaining a flicker transmission coefficient of grid connection of photovoltaic power stations are provided according to the disclosure, to obtain accurately the flicker transmission coefficient of grid connection of photovoltaic power stations.

A method for obtaining a flicker transmission coefficient of grid connection of photovoltaic power stations is provided, which includes:

establishing an equivalent circuit diagram of grid connection of a photovoltaic power station group;

forming a multi-port network diagram for the photovoltaic power station group by transforming voltage fluctuation generated by the grid-connected photovoltaic power station group into a fluctuating current according to Norton's theorem and injecting the fluctuating current into a network;

obtaining sub-transient reactance of a synchronous power generator from parameters of the synchronous power generator, obtaining sub-transient reactance of an induction motor from parameters of the induction motor, obtaining sub-transient reactance of a photovoltaic converter from parameters of the photovoltaic converter, and obtaining static load equivalent impedance from static load;

obtaining a node impedance matrix of a multi-port network by using the sub-transient reactance of the synchronous power generator, the sub-transient reactance of the induction motor, the sub-transient reactance of the photovoltaic converter and the static load equivalent impedance as ground impedance of a respective node in conjunction with the multi-port network diagram and line parameters;

obtaining an inter-harmonic voltage component of a node in the multi-port network based on the node impedance matrix and an inter-harmonic current component of the photovoltaic power station group;

obtaining a fluctuating voltage of the node by superimposing the inter-harmonic voltage component of the node on a fundamental component of the node;

obtaining effective value voltage fluctuations at different inter-harmonic current frequencies of the node based on the fluctuating voltage of the node; and

obtaining a flicker transmission coefficient between any two nodes by calculating a ratio of the effective value voltage fluctuations of the two nodes in the multi-port network.

Preferably, the photovoltaic power station group may include a single photovoltaic power station.

Preferably, the photovoltaic power station group may include multiple photovoltaic power stations.

Preferably, a per unit value of the sub-transient reactance of the photovoltaic converter may be the reciprocal of a per unit value of a start-up current of the photovoltaic converter.

Preferably, the fluctuating voltage may include a fundamental wave component voltage and an inter-harmonic component voltage.

A system for obtaining a flicker transmission coefficient of grid connection of photovoltaic power stations is provided, which includes:

an establishment unit configured to establish an equivalent circuit diagram of grid connection of a photovoltaic power station group;

a formation unit configured to form a multi-port network diagram for the photovoltaic power station group by transforming voltage fluctuation generated by the grid-connected photovoltaic power station group into a fluctuating current according to Norton's theorem and injecting the fluctuating current into a network;

a first obtaining unit configured to obtain sub-transient reactance of a synchronous power generator from parameters of the synchronous power generator, obtain sub-transient reactance of an induction motor from parameters of the induction motor, obtain sub-transient reactance of a photovoltaic converter from parameters of the photovoltaic converter, and obtain static load equivalent impedance from static load;

a second obtaining unit configured to obtain a node impedance matrix of a multi-port network by using the sub-transient reactance of the synchronous power generator, the sub-transient reactance of the induction motor, the sub-transient reactance of the photovoltaic converter and the static load equivalent impedance as ground impedance of a respective node in conjunction with the multi-port network diagram and line parameters;

a third obtaining unit configured to obtain an inter-harmonic voltage component of a node in the multi-port network based on the node impedance matrix and an inter-harmonic current component of the photovoltaic power station group;

a fourth obtaining unit configured to obtain a fluctuating voltage of the node by superimposing the inter-harmonic voltage component of the node on a fundamental component of the node;

a fifth obtaining unit configured to obtain effective value voltage fluctuations at different inter-harmonic current frequencies of the node based on the fluctuating voltage of the node; and

a sixth obtaining unit configured to obtain a flicker transmission coefficient between any two nodes by calculating a ratio of the effective value voltage fluctuation of the two nodes in the multi-port network.

Preferably, the photovoltaic power station group may include a single photovoltaic power station.

Preferably, the photovoltaic power station group may include multiple photovoltaic power stations.

Preferably, a per unit value of the sub-transient reactance of the photovoltaic converter may be the reciprocal of a per unit value of a start-up current of the photovoltaic converter.

Preferably, the fluctuating voltage may include a fundamental wave component voltage and an inter-harmonic component voltage.

As can be seen from the above technique solution, a method and system for obtaining a flicker transmission coefficient of grid connection of photovoltaic power stations are provided according to the disclosure. Considering that the frequency characteristic of the impedance of the photovoltaic converter is similar to the sub-transient reactance of the synchronous power generator and the sub-transient reactance of the induction motor, the sub-transient reactance of the photovoltaic converter is defined in the disclosure, and the sub-transient reactance of the photovoltaic converter may be obtained using the parameters of the photovoltaic converter. Therefore, a flicker transmission coefficient between any two nodes in the multi-port network diagram for the photovoltaic power station group, namely the flicker transmission coefficient of the grid connection of photovoltaic power stations, may be obtained accurately, and thereby the difficult problem in the conventional technology is solved.

## BRIEF DESCRIPTION OF THE DRAWINGS

In order to illustrate the technical solutions according to the embodiments of the disclosure or in the conventional technology more clearly, the drawings to be used in the description of the conventional technology or the embodiments will be described briefly hereinafter. Apparently, the drawings described hereinafter are only some embodiments of the present disclosure, and other drawings may be obtained by those skilled in the art according to those drawings without creative effort.

Figure 1 is a flowchart of a method for obtaining a flicker transmission coefficient of grid connection of photovoltaic power stations according to an embodiment of the disclosure;

Figure 2 is an equivalent circuit diagram of grid connection of multiple photovoltaic power stations according to an embodiment of the disclosure;

Figure 3 is a schematic diagram of a multi-port network for multiple photovoltaic power stations according to an embodiment of the disclosure; and

Figure 4 is a schematic structural diagram of a system for obtaining a flicker transmission coefficient of grid connection of photovoltaic power stations according to an embodiment of the disclosure.

## DETAILED DESCRIPTION

Hereinafter, the technical solutions in the embodiments of the present disclosure will be described clearly and completely in conjunction with the drawings in the embodiments of the present disclosure. Apparently, the described embodiments are only a part of the embodiments of the present disclosure. All the other embodiments obtained by those skilled in the art based on the embodiments of the present disclosure without creative effort will fall within the scope of protection of the disclosure.

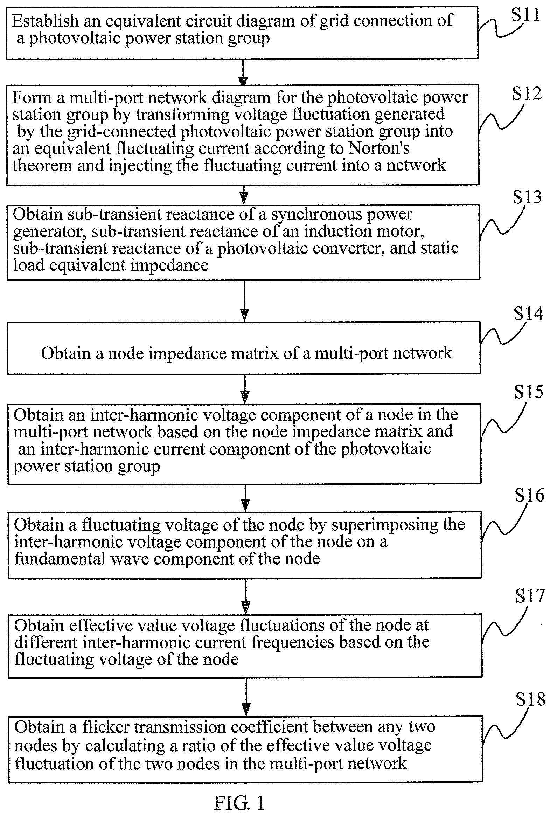

Referring to Figure 1, a flowchart of a method for obtaining a flicker transmission coefficient of grid connection of photovoltaic power stations is disclosed according to an embodiment of the disclosure. The method includes steps S11 to S 18.

In step S11, an equivalent circuit diagram of grid connection of a photovoltaic power station group is established.

The photovoltaic power station group may include a single photovoltaic power station, or may include multiple photovoltaic power stations.

In step S12, a multi-port network diagram for the photovoltaic power station group is formed by transforming voltage fluctuation generated by the grid-connected photovoltaic power station group into a fluctuating current according to Norton's theorem and injecting the fluctuating current into a network.

Norton's theorem means that a linear resistance one-port network N containing an independent source may be equivalent to a parallel connection of a current source and a resistor with regard to characteristics of a port.

In step S13, sub-transient reactance of a synchronous power generator is obtained from parameters of the synchronous power generator, sub-transient reactance of an induction motor is obtained from parameters of the induction motor, sub-transient reactance of a photovoltaic converter is obtained from parameters of the photovoltaic converter, and static load equivalent impedance is obtained from static load.

It should be noted that the sub-transient reactance of the photovoltaic converter is proposed in the disclosure, similarly to the sub-transient reactance of a synchronous power generator and the sub-transient reactance of an induction motor. It is defined that a per unit value of the sub-transient reactance of the photovoltaic converter is the reciprocal of a per unit value of a start-up current of the photovoltaic converter. Moreover, it can be seen from the frequency characteristic of the impedance of the photovoltaic converter that the sub-transient reactance of the photovoltaic converter is linear in relation to the frequency of the power grid.

In step S14, a node impedance matrix of a multi-port network is obtained by using the sub-transient reactance of the synchronous power generator, the sub-transient reactance of the induction motor, the sub-transient reactance of the photovoltaic converter and the static load equivalent impedance as ground impedance of a respective node in conjunction with the multi-port network diagram and line parameters.

In step S15, an inter-harmonic voltage component of each node in the multi-port network is obtained based on the node impedance matrix and an inter-harmonic current component of the photovoltaic power station group.

In step S16, a fluctuating voltage of the node is obtained by superimposing the inter-harmonic voltage component of the node on a fundamental component of the node.

The fluctuating voltage may include a fundamental wave component voltage and an inter-harmonic component voltage.

In step S17, effective value voltage fluctuations of the node at different inter-harmonic current frequencies of the node are obtained based on the fluctuating voltage.

In the case that the photovoltaic power station group includes multiple photovoltaic power stations, assumed that the inter-harmonic current frequency injected by a single photovoltaic power station ranges from 15 Hz to 85 Hz, and the inter-harmonic current frequency is the same for each of the multiple photovoltaic power stations, a flicker transmission coefficient obtained finally varies with the inter-harmonic current frequency in the case that the effective value voltage fluctuations is different at different inter-harmonic current frequencies, this is the frequency characteristic of the flicker transmission coefficient.

In step S18, a flicker transmission coefficient between any two nodes is obtained by calculating a ratio of the effective value voltage fluctuations of the two nodes in the multi-port network.

It should be noted that the degree of voltage fluctuation at the inter-harmonic current frequency, namely the degree of flicker, may be characterized by the effective value voltage fluctuation at different inter-harmonic current frequencies. Therefore, the flicker transmission coefficient transmitted from a certain point to another point is approximately equal to the ratio of the effective value voltage fluctuations of the two nodes.

From the foregoing, with respect to the conventional technology, in the disclosure, considering that the frequency characteristic of the impedance of the photovoltaic converter is similar to the sub-transient reactance of the synchronous power generator and the sub-transient reactance of the induction motor, the sub-transient reactance of the photovoltaic converter is defined in the disclosure, and the sub-transient reactance of the photovoltaic converter may be obtained using the parameters of the photovoltaic converter. Therefore, a flicker transmission coefficient between any two nodes in the multi-port network diagram for the photovoltaic power station group, namely the flicker transmission coefficient of the grid connection of photovoltaic power stations, may be obtained accurately, and thereby the difficult problem in the conventional technology is solved.

Secondly, the flicker transmission coefficient between any two nodes is obtained based on the node impedance matrix of the multi-port network in the disclosure. Such calculation method is not limited by the complexity of the network and the location of nodes.

Thirdly, the voltage fluctuation for a common node which is generated by the photovoltaic power station is transformed into the fluctuating current according to Norton's theorem in the disclosure. In the case that multiple photovoltaic power stations are accessed into the power grid, the flicker transmission coefficients for the multiple photovoltaic power stations accessed into the power grid may be calculated. The number of the photovoltaic power stations accessed into the power grid is not defined in the disclosure.

Finally, the method for obtaining a flicker transmission coefficient according to the disclosure is also applied to the calculation of the flicker transmission coefficient among nodes in the case that the network has not been established, which is important to the measures for limiting and restraining flicker in practice.

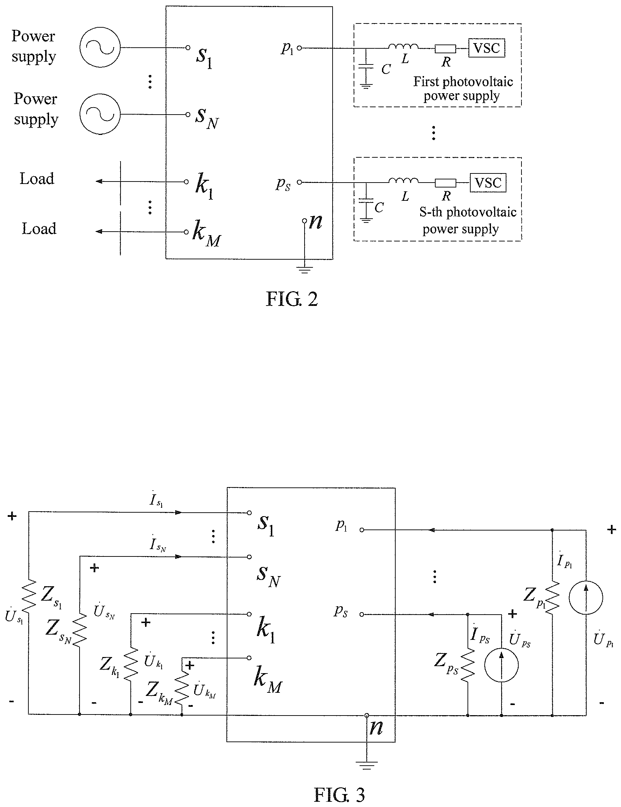

Referring to Figure 2, an equivalent circuit diagram of grid connection of multiple photovoltaic power stations is disclosed according to an embodiment of the disclosure. S photovoltaic power stations are accessed into the power grid via node $p_1$ to node $p_s$ respectively. Node $s_1$ to node $s_N$ are conventional power supply nodes, and it may be assumed that the conventional power supplies are all synchronous power generator. Node $k_1$ to node $k_M$ are load nodes, and the load includes static load and dynamic load. The dynamic load is equivalent to an induction motor. Node n is the reference node of a network.

It should be noted that the equivalent circuits of all photovoltaic power supplies are the same (referring to a first photovoltaic power supply and S-th photovoltaic power supply in Figure 2), which include a photovoltaic power supply grid-side filter inductor L, a loss resistor R, a voltage source type converter VSC and a photovoltaic power supply grid-side capacitor-to-ground C. The photovoltaic power supply grid-side filter inductor L, the loss resistor R and the voltage source type converter VSC are connected in serial, the positive plate of the photovoltaic power supply grid-side capacitor-to-ground C is connected to an end of the photovoltaic power supply grid-side filter inductor L, and the negative plate of the photovoltaic power supply grid-side capacitor-to-ground is connected to ground.

Referring to Figure 3, a schematic diagram of a multi-port network for multiple photovoltaic power stations is disclosed according to an embodiment of the disclosure. The voltage fluctuation generated by the photovoltaic power station is transformed into a fluctuating current $\dot{I}_{p1}, ..., \dot{I}_{pS}$ according to Norton's theorem and is injected into a network. A flicker generated by the photovoltaic power station is studied and the detectable maximum frequency of the flicker is 35 Hz. Therefore the fluctuating current is consisted of an inter-harmonic current component superimposed on a fundamental current component of a power frequency $f_n$=50 Hz, and the inter-harmonic frequency $f_i$ ranges from 15 Hz ($f_n$-35 Hz) to 85 Hz ($f_n$+35 Hz). $Z_{s1},..., Z_{sN}$ are sub-transient reactances (resistance is ignored) of synchronous power generators, and $Z_{k1},..., Z_{kM}$ are impedances of loads with respect to the reference node n. For static load, the load is equivalent to an impedance resistor with constant inductance in the case of. For dynamic load, the load is simulated by an induction motor, for which the impedance-to-ground refers to the sub-transient reactance (resistance is ignored) of the induction motor. Similar to the induction motor, the concept of sub-transient reactance may be proposed for the photovoltaic power station converter of the power supply, and it is defined that a per unit value of the sub-transient reactance of the photovoltaic converter is the reciprocal of a per unit value of a start-up current of the photovoltaic converter. $Z_{p1},..., Z_{pS}$ are the sub-transient reactance of the photovoltaic converter; $\dot{U}_{p1}, \dot{U}_{pS}, \dot{U}_{s1}, \dot{U}_{sN}, \dot{U}_{k1}, \dot{U}_{kM}$ are node voltages of nodes with respect to the reference node n; $\dot{I}_{s1}, \dot{I}_{sN}, \dot{I}_{p1}, \dot{I}_{pS}$ are currents injected at power supply nodes into the multi-port network in Figure 3.

For the sake of description, all nodes of $p_1, p_2, ..., p_S, s_1, s_2, ..., s_N, k_1, k_2, ..., k_M$ are renumbered as 1, 2, ..., $T(T=S+N+M)$. The inter-harmonic current components injected at access points of photovoltaic power station are $\Delta\dot{I}_1, \Delta\dot{I}_2, ..., \Delta\dot{I}S$, and assumed that the frequencies of all the inter-harmonic currents are $f_i$, and no inter-harmonic current is injected by other nodes, then the voltage inter-harmonic components for nodes in the network generated by the inter-harmonic current are $\Delta\dot{U}_1, \Delta\dot{U}_2, ..., \Delta\dot{U}_T$. The equation for inter-harmonic voltages in the network is shown in a formula (1) as follows.

$$\begin{bmatrix} \Delta \dot{U}_1 \\ \vdots \\ \Delta \dot{U}_S \\ \Delta \dot{U}_{S+1} \\ \vdots \\ \Delta \dot{U}_T \end{bmatrix} = \begin{bmatrix} Z_{11} & \cdots & Z_{1S} & Z_{1(S+1)} & \cdots & Z_{1T} \\ \vdots & \ddots & \vdots & \vdots & & \vdots \\ Z_{S1} & \cdots & Z_{SS} & Z_{S(S+1)} & \cdots & Z_{ST} \\ Z_{(S+1)1} & \cdots & Z_{(S+1)S} & Z_{(S+1)(S+1)} & \cdots & Z_{(S+1)T} \\ \vdots & & \vdots & \vdots & \ddots & \vdots \\ Z_{T1} & \cdots & Z_{TS} & Z_{T(S+1)} & \cdots & Z_{TT} \end{bmatrix} \begin{bmatrix} \Delta \dot{I}_1 \\ \vdots \\ \Delta \dot{I}_S \\ 0 \\ \vdots \\ 0 \end{bmatrix} \quad (1)$$

where $Z_{xx}(x=1,2,...,T)$ is the self impedance of a node x, and $Z_{xy}(y=1,2,...,T, y{\neq}x)$ is the mutual impedance between the node x and a node $y$, then the inter-harmonic voltage $\Delta \dot{U}_x$ for the node x may be obtained by a formula (2) as follows.

$$\Delta \dot{U}_x = Z_{x1}\Delta \dot{I}_1 + Z_{x2}\Delta \dot{I}_2 + ... + Z_{xL}\Delta \dot{I}_S \quad (2)$$

Since the frequencies of the inter-harmonic currents injected at photovoltaic converters are the same, and the frequencies of the inter-harmonic voltages for nodes are also $f_i$, then the fluctuating voltages for nodes includes a fundamental wave component and an inter-harmonic component with the frequency of $f_i$. Assumed that three-phase voltage is symmetrical, an instantaneous single-phase voltage $u_x$ for the node x is represented by a formula (3) as follows.

$$u_x = \sqrt{2}U_n \cos(2\pi f_n t) + \sqrt{2}U_i \cos(2\pi f_i t) \quad (3)$$

$U_n$ is an effective value of the fundamental wave voltage component, $U_i$ is an effective value of the inter-harmonic component with the frequency of $f_i$.
Given

$$m = \frac{U_i}{U_n} \quad (4)$$

then

$$u_x = \sqrt{2}U_n \cos(2\pi f_n t) + \sqrt{2}mU_n \cos(2\pi f_i t) \quad (5)$$

The studies showed that, in the case that a voltage of a certain point is consisted of an inter-harmonic component superimposed on a fundamental wave component, the effective value voltage fluctuation is shown in a formula (6) as follows.

$$\left.\frac{\Delta U_x}{U_x}\right|_{rms} \approx m\frac{\sin \alpha}{\alpha\left(1+\dfrac{\alpha}{2\pi}\right)} \quad (6)$$

where the angle $\alpha$ in the formula (6) is represented by a formula (7) as follows.

$$\alpha = \pi \frac{\left|f_n - f_i\right|}{f_n} \qquad (7)$$

Since the flicker value is related to the effective value voltage fluctuation for nodes, the flicker transmission coefficient transmitted from the node x to the node *y* is shown in a formula (8) as follows.

$$T_{x \to y} = \frac{\left.\dfrac{\Delta U_y}{U_y}\right|_{rms}}{\left.\dfrac{\Delta U_x}{U_x}\right|_{rms}} \qquad (8)$$

In the case that the inter-harmonic frequency f ranges from 15 Hz to 85 Hz, the frequency characteristic of the flicker transmission coefficient between any two nodes may be obtained.

From the foregoing, with respect to the conventional technology, in the disclosure, considering that the frequency characteristic of the impedance of the photovoltaic converter is similar to the sub-transient reactance of the synchronous power generator and the sub-transient reactance of the induction motor, the sub-transient reactance of the photovoltaic converter is defined in the disclosure, and the sub-transient reactance of the photovoltaic converter may be obtained using the parameters of the photovoltaic converter. Therefore, a flicker transmission coefficient between any two nodes in the multi-port network diagram for the photovoltaic power station group, namely the flicker transmission coefficient of the grid connection of photovoltaic power stations, may be obtained accurately, and thereby the difficult problem in the conventional technology is solved.

In correspondence with the embodiment of the method, a system for obtaining a flicker transmission coefficient of grid connection of photovoltaic power stations is further provided according to the disclosure.

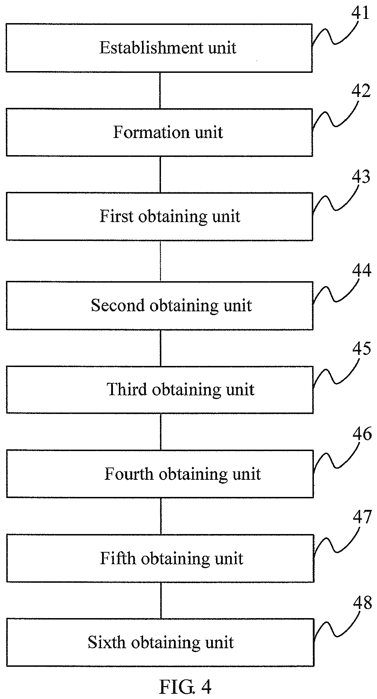

Referring to Figure 4, a schematic structural diagram of a system for obtaining a flicker transmission coefficient of grid connection of photovoltaic power stations is disclosed according to an embodiment of the disclosure. The system includes an establishment unit 41, a formation unit 42, a first obtaining unit 43, a second obtaining unit 44, a third obtaining unit 45, a fourth obtaining unit 46, a fifth obtaining unit 47 and a sixth obtaining unit 48.

The establishment unit 41 is configured to establish an equivalent circuit diagram of grid connection of a photovoltaic power station group.

The photovoltaic power station group may include a single photovoltaic power station, or may include multiple photovoltaic power stations.

The formation unit 42 is configured to form a multi-port network diagram for the photovoltaic power station group by transforming voltage fluctuation generated by the grid-connected photovoltaic power station group into a fluctuating current according to Norton's theorem and injecting the fluctuating current into a network.

Norton's theorem means that a linear resistance one-port network N containing an independent source may be equivalent to a parallel connection of a current source and a resistor with regard to its characteristics of a port.

The first obtaining unit 43 is configured to obtain sub-transient reactance of a synchronous power generator from parameters of the synchronous power generator, obtain sub-transient reactance of an induction motor from parameters of the induction motor, obtain sub-transient reactance of a photovoltaic converter from parameters of the photovoltaic converter, and obtain static load equivalent impedance from static load.

The second obtaining unit 44 is configured to obtain a node impedance matrix of a multi-port network by using the sub-transient reactance of the synchronous power generator, the sub-transient reactance of the induction motor, the sub-transient reactance of the photovoltaic converter and the static load equivalent impedance as ground impedance of a respective node in conjunction with the multi-port network diagram and line parameters.

The third obtaining unit 45 is configured to obtain an inter-harmonic voltage component of a node in the multi-port network based on the node impedance matrix and an inter-harmonic current component of the photovoltaic power station group.

The fourth obtaining unit 46 is configured to obtain a fluctuating voltage of the node by superimposing the inter-harmonic voltage component of the node on a fundamental component of the node.

The fluctuating voltage may include a fundamental wave component voltage and an inter-harmonic component voltage.

The fifth obtaining unit 47 is configured to obtain effective value voltage fluctuations at different inter-harmonic current frequencies of the node based on the fluctuating voltage of the node.

In the case that the photovoltaic power station group includes multiple photovoltaic power stations, assumed that a frequency of the inter-harmonic current injected by a single photovoltaic power station ranges from 15 Hz to 85 Hz, and the inter-harmonic current frequency is the same for each of the multiple photovoltaic power stations, a flicker transmission coefficient obtained finally varies with variation of the inter-harmonic current frequency in the case that the effective value voltage fluctuations is different at different inter-harmonic current frequencies, this is the frequency characteristic of the flicker transmission coefficient.

The sixth obtaining unit 48 is configured to obtain a flicker transmission coefficient between any two nodes by calculating a ratio of the effective value voltage fluctuation of the two nodes in the multi-port network.

It should be noted that the degree of voltage fluctuation at the inter-harmonic current frequency, namely the degree of flicker, may be characterized by the effective value voltage fluctuation at different inter-harmonic current frequencies. Therefore the flicker transmission coefficient transmitted from a certain point to another point is approximately equal to the ratio of the effective value voltage fluctuations of the two nodes.

From the foregoing, with respect to the conventional technology, in the disclosure, considering that the frequency characteristic of the impedance of the photovoltaic converter is similar to the sub-transient reactance of the synchronous power generator and the sub-transient reactance of the induction motor, the sub-transient reactance of the photovoltaic converter is defined in the disclosure, and the sub-transient reactance of the photovoltaic converter may be obtained using the parameters of the photovoltaic converter. Therefore, a flicker transmission coefficient between any two nodes in the multi-port network diagram for the photovoltaic power station group, namely the flicker transmission coefficient of the grid connection of photovoltaic power stations, may be obtained accurately, and thereby the difficult problem in the conventional technology is solved.

Secondly, the flicker transmission coefficient between any two nodes is obtained based on the node impedance matrix of the multi-port network in the disclosure. Such calculation method is not limited by the complexity of the network and the location of nodes.

Thirdly, the voltage fluctuation for a common node which is generated by the photovoltaic power station is transformed into equivalent fluctuating current according to Norton's theorem in the disclosure. In the case that multiple photovoltaic power stations are accessed into the power grid, the flicker transmission coefficients in a case when multiple photovoltaic power stations are being accessed into the power grid may be calculated. The number of the photovoltaic power stations accessed into the power grid is not defined in the disclosure.

Finally, the method for obtaining a flicker transmission coefficient according to the disclosure is also applied to the calculation of the flicker transmission coefficient among nodes in the case that the network has not been established, which is important to the measures for limiting and restraining flicker in practice.

It should be noted that the operational principle of components in the embodiment of the system may refer to the embodiment of the method, which is not repeated any more herein.

The embodiments of the present disclosure are described herein in a progressive manner, with the emphasis of each of the embodiments placed on the difference between it and the other embodiments; hence, for the same or similar parts between the embodiments, one can refer to the other embodiments.

The description of the embodiments herein enables those skilled in the art to implement or use the present disclosure. Numerous modifications to the embodiments will be apparent to those skilled in the art. Therefore, the present disclosure is not limited to the embodiments described herein, but in accordance with the widest scope consistent with the principle and novel features disclosed herein.

**Claims**

1. A method for obtaining a flicker transmission coefficient of grid connection of photovoltaic power stations, comprising:

   establishing an equivalent circuit diagram of grid connection of a photovoltaic power station group (S11);
   forming a multi-port network diagram for the photovoltaic power station group by transforming voltage fluctuation generated by the grid-connected photovoltaic power station group into a equivalent fluctuating current according to Norton's theorem and injecting the fluctuating current into a network (S12);
   obtaining sub-transient reactance of a synchronous power generator from parameters of the synchronous power generator, obtaining sub-transient reactance of an induction motor from parameters of the induction motor, obtaining sub-transient reactance of a photovoltaic converter from parameters of the photovoltaic converter, and obtaining static load equivalent impedance from static load (S 13);
   obtaining a node impedance matrix of a multi-port network by using the sub-transient reactance of the synchronous power generator, the sub-transient reactance of the induction motor, the sub-transient reactance of the photovoltaic converter and the static load equivalent impedance as ground impedance of a respective node in conjunction with the multi-port network diagram and line parameters (S 14);

obtaining an inter-harmonic voltage component of a node in the multi-port network based on the node impedance matrix and an inter-harmonic current component of the photovoltaic power station group (S 15);
obtaining a fluctuating voltage of the node by superimposing the inter-harmonic voltage component of the node on a fundamental wave component of the node (S16);
obtaining effective value voltage fluctuations at different inter-harmonic current frequencies of the node based on the fluctuating voltage of the node (S 17); and
obtaining a flicker transmission coefficient between any two nodes by calculating a ratio of the effective value voltage fluctuations of the two nodes in the multi-port network (S18).

2. The method according to claim 1, wherein the photovoltaic power station group comprises a single photovoltaic power station.

3. The method according to claim 1, wherein the photovoltaic power station group comprises a plurality of photovoltaic power stations.

4. The method according to claim 1, wherein a per unit value of the sub-transient reactance of the photovoltaic converter is the reciprocal of a per unit value of a start-up current of the photovoltaic converter.

5. The method according to claim 1, wherein the fluctuating voltage comprises a fundamental wave component voltage and an inter-harmonic component voltage.

6. A system for obtaining a flicker transmission coefficient of grid connection of photovoltaic power stations, comprising:

an establishment unit (41) configured to establish an equivalent circuit diagram of grid connection of a photovoltaic power station group;
a formation unit (42) configured to form a multi-port network diagram for the photovoltaic power station group by transforming voltage fluctuation generated by the grid-connected photovoltaic power station group into an equivalent fluctuating current according to Norton's theorem and injecting the fluctuating current into a network;
a first obtaining unit (43) configured to obtain sub-transient reactance of a synchronous power generator from parameters of the synchronous power generator, obtain sub-transient reactance of an induction motor from parameters of the induction motor, obtain sub-transient reactance of a photovoltaic converter from parameters of the photovoltaic converter, and obtain static load equivalent impedance from static load;
a second obtaining unit (44) configured to obtain a node impedance matrix of a multi-port network by using the sub-transient reactance of the synchronous power generator, the sub-transient reactance of the induction motor, the sub-transient reactance of the photovoltaic converter and the static load equivalent impedance as ground impedance of a respective node in conjunction with the multi-port network diagram and line parameters;
a third obtaining unit (45) configured to obtain an inter-harmonic voltage component of a node in the multi-port network based on the node impedance matrix and an inter-harmonic current component of the photovoltaic power station group;
a fourth obtaining unit (46) configured to obtain a fluctuating voltage of the node by superimposing the inter-harmonic voltage component of the node on a fundamental wave component of the node;
a fifth obtaining unit (47) configured to obtain effective value voltage fluctuations at different inter-harmonic current frequencies of the node based on the fluctuating voltage of the node; and
a sixth obtaining unit (48) configured to obtain a flicker transmission coefficient between any two nodes by calculating a ratio of the effective value voltage fluctuation of the two nodes in the multi-port network.

7. The system according to claim 6, wherein the photovoltaic power station group comprises a single photovoltaic power station.

8. The system according to claim 6, wherein the photovoltaic power station group comprises a plurality of photovoltaic power stations.

9. The system according to claim 6, wherein a per unit value of the sub-transient reactance of the photovoltaic converter is the reciprocal of a per unit value of a start-up current of the photovoltaic converter.

10. The system according to claim 6, wherein the fluctuating voltage comprises a fundamental wave component voltage and an inter-harmonic component voltage.

**Patentansprüche**

1. Verfahren zur Ermittlung eines Flickerübertragungskoeffizienten einer Netzverbindung von photovoltaischen Kraftwerken, umfassend:

   Erstellen eines Ersatzschaltbildes einer Netzverbindung von einer photovoltaischen Kraftwerksgruppe (S 11);
   Bilden eines Multi-Port-Netzwerkdiagramms für die photovoltaische Kraftwerksgruppe, indem Spannungsschwankungen, welche durch die gitterverbundene Kraftwerksgruppe erzeugt wird, gemäss dem Norton-Theorem in einen äquivalenten schwankenden Strom transformiert werden, und Einspeisen des schwankenden Stroms in ein Netzwerk (S12);
   Erhalten einer subtransienten Reaktanz von einem Synchronstromgenerator aus Parametern des Synchronstromgenerators, Erhalten einer subtransienten Reaktanz von einem Induktionsmotor aus Parametern des Induktionsmotors, Erhalten einer subtransienten Reaktanz eines photovoltaischen Umrichters aus Parametern des photovoltaischen Umrichters, und Erhalten von statischer Lastersatzimpedanz aus statischer Last (S 13);
   Erhalten einer Knoten-Impedanz-Matrix eines Multi-Port-Netzwerks, indem die subtransiente Reaktanz des Synchronstromgenerators, die subtransiente Reaktanz des Induktionsmotors, die subtransiente Reaktanz des photovoltaischen Umrichters und die statische Lastersatzimpedanz als Erdungsimpedanz von einem jeweiligen Knoten in Verbindung mit dem Multi-Port-Netzwerkdiagramm und Leitungsparametern (S14) verwendet werden;
   Erhalten einer interharmonischen Spannungskomponente von einem Knoten in dem Multi-Port-Netzwerk basierend auf der Knoten-Impedanz-Matrix und einer interharmonischen Stromkomponente von der photovoltaischen Kraftwerkgruppe (S 15);
   Erhalten einer schwankenden Spannung des Knotens durch Überlagerung der interharmonischen Spannungskomponente des Knotens mit einer Grundwellenkomponente des Knotens (S16);
   Erhalten von effektiven Wertspannungsschwankungen bei unterschiedlichen interharmonischen Stromfrequenzen des Knotens basierend auf der schwankenden Spannung des Knotens (S17); und
   Erhalten eines Flickerübertragungskoeffizienten zwischen zwei Knoten, indem ein Verhältnis der effektiven Wertspannungsschwankungen der zwei Knoten im Multi-Port-Netzwerk berechnet wird (S18).

2. Verfahren gemäss Anspruch 1, wobei die photovoltaische Kraftwerkgruppe ein einziges photovoltaisches Kraftwerk umfasst.

3. Verfahren gemäss Anspruch 1, wobei die photovoltaische Kraftwerkgruppe eine Vielzahl von photovoltaischen Kraftwerken umfasst.

4. Verfahren gemäss Anspruch 1, wobei ein pro Einheitswert der subtransienten Reaktanz des photovoltaischen Umrichters der Kehrwert eines pro Einheitswerts eines Anlaufstroms des photovoltaischen Umrichters ist.

5. Verfahren gemäss Anspruch 1, wobei die schwankende Spannung eine Grundwellenkomponentenspannung und eine interharmonische Komponentenspannung umfasst.

6. System zum Ermitteln eines Flickerübertragungskoeffizienten einer Netzverbindung von photovoltaischen Kraftwerken, umfassend:

   eine Erzeugungseinheit (41), welche dazu ausgebildet ist, ein Ersatzschaltbild einer Netzverbindung von einer photovoltaischen Kraftwerksgruppe zu erzeugen;
   eine Bildungseinheit (42), welche dazu ausgebildet ist, ein Multi-Port-Netzwerkdiagramm für die photovoltaische Kraftwerksgruppe zu bilden, indem Spannungsschwankungen, welche durch die gitterverbundene Kraftwerksgruppe erzeugt wird, gemäss dem Norton-Theorem in einen äquivalenten schwankenden Strom transformiert werden, und der schwankende Strom in ein Netzwerk eingespiesen wird;
   eine erste Erhaltungseinheit (43), welche dazu ausgebildet ist, eine subtransiente Reaktanz von einem Synchronstromgenerator aus Parametern des Synchronstromgenerators zu erhalten, eine subtransiente Reaktanz von einem Induktionsmotor aus Parametern des Induktionsmotors zu erhalten, eine subtransiente Reaktanz eines photovoltaischen Umrichters aus Parametern des photovoltaischen Umrichters zu erhalten, und statische Lastersatzimpedanz aus statischer Last zu erhalten;
   eine zweite Erhaltungseinheit (44), welche dazu ausgebildet ist, eine Knoten-Impedanz-Matrix eines Multi-Port-Netzwerks zu erhalten, indem die subtransiente Reaktanz des Synchronstromgenerators, die subtransiente Reaktanz des Induktionsmotors, die subtransiente Reaktanz des photovoltaischen Umrichters und die statische Lastersatzimpedanz als Erdungsimpedanz von einem jeweiligen Knoten in Verbindung mit dem Multi-Port-Netzwerkdiagramm und Leitungsparametern verwendet werden;

eine dritte Erhaltungseinheit (45), welche dazu ausgebildet ist, eine interharmonische Spannungskomponente von einem Knoten in dem Multi-Port-Netzwerk basierend auf der Knoten-Impedanz-Matrix und einer interharmonischen Stromkomponente von der photovoltaischen Kraftwerkgruppe zu erhalten;

Eine vierte Erhaltungseinheit (46), welche dazu ausgebildet ist, eine schwankende Spannung des Knotens durch Überlagerung der interharmonischen Spannungskomponente des Knotens mit einer Grundwellenkomponente des Knotens zu erhalten;

eine fünfte Erhaltungseinheit (47), welche dazu ausgebildet ist, effektive Wertspannungsschwankungen bei unterschiedlichen interharmonischen Stromfrequenzen des Knotens basierend auf der schwankenden Spannung des Knotens zu erhalten; und

eine sechste Erhaltungseinheit (48), welche dazu ausgebildet ist, einen Flickerübertragungskoeffizienten zwischen zwei Knoten zu erhalten, indem ein Verhältnis der effektiven Wertspannungsschwankungen der zwei Knoten im Multi-Port-Netzwerk berechnet wird.

7.  System gemäss Anspruch 6, wobei die photovoltaische Kraftwerkgruppe ein einziges photovoltaisches Kraftwerk umfasst.

8.  System gemäss Anspruch 6, wobei die photovoltaische Kraftwerkgruppe eine Vielzahl von photovoltaischen Kraftwerken umfasst.

9.  System gemäss Anspruch 6, wobei ein pro Einheitswert der subtransienten Reaktanz des photovoltaischen Umrichters der Kehrwert eines pro Einheitswerts eines Anlaufstroms des photovoltaischen Umrichters ist.

10. System gemäss Anspruch 6, wobei die schwankende Spannung eine Grundwellenkomponentenspannung und eine interharmonische Komponentenspannung umfasst.


**Revendications**

1.  Un procédé pour obtenir un coefficient de transmission d'oscillations d'un raccordement au réseau de distribution électrique de centrales photovoltaïques, comprenant :

    établir un diagramme de circuit équivalent du raccordement au réseau de distribution électrique d'un groupe de centrales photovoltaïques (S11),

    former un diagramme de réseau multi-ports pour le groupe de centrales photovoltaïques en transformant la fluctuation de tension électrique générée par le groupe de centrales photovoltaïques connectées au réseau de distribution électrique en un courant électrique fluctuant équivalent selon le théorème de Norton et injecter le courant électrique fluctuant dans un réseau (S12) ;

    obtenir une réactance subtransitoire d'un groupe électrogène synchrone à partir de paramètres du groupe électrogène synchrone, obtenir une réactance subtransitoire d'un moteur à induction à partir de paramètres du moteur à induction, obtenir une réactance subtransitoire d'un transformateur photovoltaïque à partir de paramètres du transformateur photovoltaïque, et obtenir une impédance équivalente de charge statique à partir d'une charge statique (S13) ;

    obtenir une matrice d'impédance de noeuds d'un réseau multi-ports en utilisant la réactance subtransitoire du groupe électrogène synchrone, la réactance subtransitoire du moteur à induction, la réactance subtransitoire du transformateur photovoltaïque, et l'impédance équivalente de la charge statique en tant que impédance de masse d'un noeud respectif en conjonction avec le diagramme de réseau multi-ports et paramètres de ligne (S14) ;

    obtenir une composante de tension électrique interharmonique d'un noeud dans le réseau multi-ports à base de la matrice d'impédance de noeuds et une composante de courant électrique interharmonique du groupe de centrales photovoltaïques (S 15) ;

    obtenir un tension électrique fluctuant du noeud en superposant la composante de tension électrique interharmonique du noeud sur une composante d'onde fondamentale du noeud (S 16) ;

    obtenir des fluctuations de valeur effective de tension électrique à de différentes fréquences de courant électrique interharmoniques du noeud à base de la tension électrique fluctuante du noeud (S17) ; et

    obtenir un coefficient de transmission d'oscillations entre un quelconque de deux noeuds en calculant un rapport entre les fluctuations de valeur effective de tension électrique des deux noeuds dans le réseau multi-ports (S18).

**2.** Le procédé selon la revendication 1, dans lequel le groupe de centrales photovoltaïques comprend une centrale photovoltaïque unique.

**3.** Le procédé selon la revendication 1, dans lequel le groupe de centrales photovoltaïques comprend une pluralité de centrales photovoltaïques.

**4.** Le procédé selon la revendication 1, dans lequel la valeur par unité de la réactance subtransitoire du transformateur photovoltaïque est la réciproque de la valeur par unité d'un courant de démarrage du transformateur photovoltaïque.

**5.** Le procédé selon la revendication 1, dans lequel la tension électrique fluctuante comprend un tension électrique de composante à onde fondamentale et une tension électrique de composante interharmonique.

**6.** Un système pour obtenir un coefficient de transmission d'oscillation d'un raccordement au réseau de distribution électrique de centrales photovoltaïques, comprenant:

une unité d'établissement (41) configurée pour établir un diagramme de circuit équivalent du raccordement au réseau de distribution électrique d'un groupe de centrales photovoltaïques ;
une unité de formation (42) configurée pour former un diagramme de réseau multi-ports pour le groupe de centrales photovoltaïques en transformant la fluctuation de tension électrique générée par le groupe de centrales photovoltaïques connecté au réseau de distribution électrique en un courant électrique fluctuant équivalent selon le théorème de Norton et injecter le courant électrique fluctuant dans un réseau;
une première unité d'obtention (43) configurée pour obtenir une réactance subtransitoire d'un groupe électrogène synchrone à partir de paramètres du groupe électrogène synchrone, obtenir une réactance subtransitoire d'un moteur à induction à partir de paramètres du moteur à induction, obtenir une réactance subtransitoire d'un transformateur photovoltaïque à partir des paramètres du transformateur photovoltaïque, et obtenir une impédance équivalente de charge statique à partir d'une charge statique;
une seconde unité d'obtention (44) configurée pour obtenir une matrice d'impédance de noeuds d'un réseau multi-ports en utilisant la réactance subtransitoire du groupe électrogène synchrone, la réactance subtransitoire du moteur à induction, la réactance subtransitoire du transformateur photovoltaïque, et l'impédance équivalente de la charge statique en tant qu'impédance de masse, d'un noeud respectif en conjonction avec le diagramme de réseau multi-ports et paramètres de ligne;
une troisième unité d'obtention (45) configurée pour obtenir une composante de tension électrique interharmonique d'un noeud dans le réseau multi-ports à base de la matrice d'impédance de noeuds et une composante de courant électrique interharmonique du groupe de centrales photovoltaïques;
une quatrième unité d'obtention (46) configurée pour obtenir un tension électrique fluctuante du noeud en superposant la composante de tension électrique interharmonique du noeud sur une composante d'onde fondamentale du noeud;
une cinquième unité d'obtention (47) configurée pour obtenir des fluctuations de valeur effective de tension électrique à de différentes fréquences de courant électrique interharmoniques du noeud à base de la tension électrique fluctuante du noeud ; et
une sixième unité d'obtention (48) configurée pour obtenir un coefficient de transmission d'oscillations entre un quelconque de deux noeuds en calculant un rapport entre les fluctuations de valeur effective de tension électrique des deux noeuds dans le réseau multi-ports.

**7.** Le système selon la revendication 6, dans lequel le groupe de centrales photovoltaïques comprend une centrale photovoltaïque unique.

**8.** Le système selon la revendication 6, dans lequel le groupe de centrales photovoltaïques comprend une pluralité de centrales photovoltaïques.

**9.** Le système selon la revendication 6, dans lequel la valeur par unité de la réactance subtransitoire du transformateur photovoltaïque est la réciproque de la valeur par unité d'un courant de démarrage du transformateur photovoltaïque.

**10.** Le système selon la revendication 6, dans lequel la tension électrique fluctuante comprend un tension électrique de composante à onde fondamentale et une tension électrique de composante interharmonique.

Establish an equivalent circuit diagram of grid connection of a photovoltaic power station group — S11

Form a multi-port network diagram for the photovoltaic power station group by transforming voltage fluctuation generated by the grid-connected photovoltaic power station group into an equivalent fluctuating current according to Norton's theorem and injecting the fluctuating current into a network — S12

Obtain sub-transient reactance of a synchronous power generator, sub-transient reactance of an induction motor, sub-transient reactance of a photovoltaic converter, and static load equivalent impedance — S13

Obtain a node impedance matrix of a multi-port network — S14

Obtain an inter-harmonic voltage component of a node in the multi-port network based on the node impedance matrix and an inter-harmonic current component of the photovoltaic power station group — S15

Obtain a fluctuating voltage of the node by superimposing the inter-harmonic voltage component of the node on a fundamental wave component of the node — S16

Obtain effective value voltage fluctuations of the node at different inter-harmonic current frequencies based on the fluctuating voltage of the node — S17

Obtain a flicker transmission coefficient between any two nodes by calculating a ratio of the effective value voltage fluctuation of the two nodes in the multi-port network — S18

FIG. 1

FIG. 2

FIG. 3

41

Establishment unit

42

Formation unit

43

First obtaining unit

44

Second obtaining unit

45

Third obtaining unit

46

Fourth obtaining unit

47

Fifth obtaining unit

48

Sixth obtaining unit

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013024168 A1